# EUROPÄISCHE PATENTSCHRIFT

(11) **EP 3 437 952 B1**
(45) Veröffentlichungstag und Bekanntmachung des Hinweises auf die Patenterteilung: **06.11.2024**
(21) Anmeldenummer: 18181869.1
(22) Anmeldetag: 05.07.2018
(51) Int. Cl.: B61D 19/00, B60J 10/80

(54) **SCHIEBETÜR**
SLIDING DOOR
PORTE COULISSANTE

(30) Priorität: 02.08.2017 DE 202017104633 U; 02.08.2017 DE 202017104634 U; 06.06.2018 DE 202018103171 U
(43) Veröffentlichungstag der Anmeldung: 06.02.2019
(73) Patentinhaber: Bode - Die Tür GmbH, 34123 Kassel (DE)
(72) Erfinder: Theis, Christoph, 34537 Bad Wildungen (DE)
(74) Vertreter: Patentanwälte Bauer Vorberg Kayser

(56) Entgegenhaltungen:
- EP-A1- 2 305 938
- WO-A1-2012/140004
- DE-A1- 102014 217 343
- DE-U1- 202009 008 974

## Beschreibung

Die Erfindung betrifft eine Schiebetür eines Fahrzeugs, insbesondere ein Schienenfahrzeug, mit einem Türportal, mit einem in Querrichtung verfahrbaren Türelement und einer am Türelement befestigten Schiebetürdichtung.

Schiebetüren mit entsprechenden Schiebetürdichtungen sind seit langem bekannt und werden in verschiedensten Ausführungsformen eingesetzt. Aufgrund steigender Komfortansprüche wird es zunehmend wichtiger, den Schalldurchgang von Schiebetüren insbesondere in Schienenfahrzeugen zu reduzieren. Auch soll die Schiebetürdichtung den Durchgang von Luft und Flüssigkeiten sicher verhindern. Insbesondere stellt dabei die Abdichtung des unteren bzw. oberen Randbereichs des Türelements ein Problem dar, da sich das Türelement beim Öffnen und Schlie-ßen entlang dieser Schiebetürdichtung bewegt.

Die bekannteste Art der Abdichtung besteht derzeit in der Nutzung von schleifenden Lippen- oder Bürstendichtungen. Diese Dichtungen sind als feststehende Dichtungen ausgeführt und das Türelement bleibt während der Öffnungs- und Schließbewegung mit ihnen in Kontakt. Aufgrund des Schleifens der Dichtung kommt es dabei zu einer Erhöhung der notwendigen Schiebekräfte und zu einem relativ gro-ßen Verschleiß.

Auch sind Dichtungen bekannt, die Federkraft zur besseren Abdichtung nutzen. Beispielsweise zeigt die DE 10 2014 217 343 A1 eine Kombination einer Elastomer-dichtung mit einem metallischem Federelement. Dadurch wird zwar die Abdichtung verbessert, aber die Abnutzung während der Öffnungs- und Schließbewegung der Tür sogar erhöht.

Die WO 2012/140004 A1 zeigt eine Dichtung, bei der die Federkraft in die entgegengesetzte Richtung wirkt, sie hebt die Dichtung ab, wenn sie nicht durch ein Betätigungsmittel gegen eine Dichtfläche gedrückt wird. Dies bedeutet, dass der Federkraft in der geschlossenen Stellung durch ein Betätigungsmittel stets entgegengewirkt werden muss, was auf Dauer wiederum zu Lasten der Federkraft und zu erhöhtem Verschleiß führt.

Die Aufgabe der vorliegenden Erfindung besteht somit darin, die Nachteile des Standes der Technik zu vermeiden oder zumindest zu verringern. Die Schiebetürdichtung des Türportals soll möglichst verschleißarm betreibbar sein, wobei die Abdichtung des Türsystems in ausreichendem Maße gewährleistet sein soll.

Die Erfindung wird durch eine Schiebetür mit den Merkmalen des Anspruchs 1 gelöst.

Ein wesentliches Merkmal der Erfindung ist ein Klappscharnier, welches am Türelement befestigt und in Richtung des Türportals also quer zur Hauptbewegungsrichtung des Türelements schwenkbar ist. Somit kann die Schiebetürdichtung durch Schwenken oder Klappen des Klappscharniers insbesondere von der geschlossenen Stellung in eine geöffnete Stellung gebracht werden. In der geöffneten Stellung wird die Schiebetürdichtung also nicht zusammengedrückt und dichtet dementsprechend nicht mehr oder wesentlich schlechter ab. Der Vorteil besteht dann darin, dass ein Verfahren des Türelements ohne Schleifen der Schiebetürdichtung erfolgen kann. Dadurch wird zum Einen die für das Verfahren des Türelements notwendige Kraft reduziert, zum Anderen wird der Verschleiß der Schiebetürdichtung wesentlich verringert.

Der zweite wesentliche Aspekt der Erfindung besteht darin, dass sich die Schiebetür in geschlossener Stellung, also bei geschlossener Schiebetür, sozusagen in der Grundposition befindet. Um das Türelement und damit die Schiebetürdichtung öffnen zu können, wird eine zusätzliche Kraft aufgebracht, die das Klappscharnier in die geöffnete Stellung bewegt. Die zur Öffnung des Klappscharniers notwendige Kraft, die die Dichtflächen der Schiebetürdichtungen voneinander entfernt, ist dabei größer, als diejenige Kraft, die die Schiebetürdichtung in der geschlossenen Stellung zusammendrückt.

Die erfindungsgemäße Schiebetür weist also eine erste Dichtung, die am verfahrbaren Türelement angeordnet ist und eine zweite ortsfeste bzw. feststehende Dichtung auf, die am Türportal angeordnet ist. Zumindest eine der Dichtungen ist vorzugsweise als verformbare Dichtung, beispielsweise als Hohlkammerdichtung ausgeführt. Die entsprechend andere Dichtung kann dann entweder eine nicht verformbare Dichtfläche oder ebenfalls eine verformbare Dichtung sein.

Das Klappscharnier ist in einer besonders vorteilhaften Ausführungsvariante durch einen elastischen Elastomer gebildet. Die Elastizität kann dabei insbesondere den Anforderungen entsprechend durch eine angepasste Mischung des Elastomers eingestellt werden. Die Nutzung eines Elastomers hat den Vorteil, dass das Klappscharnier selbst bereits eine Federkraft bewirken kann, die die Schiebetürdichtung in der geschlossenen Stellung hält. Ist das Türelement geschlossen, befindet sich das Elastomer in seiner Grundstellung und hält die beiden Dichtungen zusammen. Wird das Türelement geöffnet, wird das Klappscharnier bzw. der Elastomer nach außen, also in die vom Türportal wegweisende Richtung, geschwenkt, wodurch die Tür ohne Schleifkontakt der Schiebetürdichtung verfahren werden kann.

Der Elastomer ist durch geeignete Maßnahmen am Türelement befestigt. Beispielsweise kann eine Halteschiene vorgesehen sein, die außenseitig angeordnet ist und sich in Querrichtung des Türelements erstreckt. Der Elastomer befindet sich somit zwischen der Halteschiene und einem oberen oder unteren Bereich des Türelements.

Die am Türelement angeordnete erste Dichtung ist vorzugsweise auf einem formstabilen Dichtungslängsträger angeordnet, der sich in Querrichtung des Türelements, also in Verfahrrichtung, erstreckt und am Elastomer befestigt ist. Der Dichtungslängsträger kann beispielsweise durch ein Aluminiumprofil gebildet sein. Weiterhin ist ein Betätigungselement vorgesehen, welches ein Schwenken des Elastomers in Abhängigkeit des Verschiebewegs des Türelements bewirkt. Bewegt sich das Türelement von der geschlossenen in die geöffnete Stellung, wird demnach das Klappscharnier automatisch geschwenkt und die Schiebetürdichtung freigegeben.

Das Betätigungselement kann beispielsweise durch eine Rolle gebildet sein, die auf einer am Türportal angeordneten Führungsschiene abrollt. Die Führungsschiene weist in ihrem Verlauf, also im Bereich der Abrollstrecke der Rolle, eine Vertiefung auf, in der sich die Rolle im geschlossenen Zustand des Türelements befindet. Durch die Vertiefung wird der Abstand der am Türelement angeordneten Rolle zum Türportal verringert, wodurch sich die erste Dichtung näher am Türportal befindet bzw. die beiden Dichtungen in Kontakt stehen. Wird das Türelement in Richtung der geöffneten Stellung bewegt, bewegt sich die Rolle aus der Vertiefung heraus und drückt damit den Dichtungslängsträger nach außen und somit die beiden Dichtungen auseinander.

Die Rolle ist vorzugsweise am Dichtungslängsträger gelagert. Der Elastomer bzw. das Klappscharnier befindet sich somit zwischen der außenseitig angeordneten Rolle und der schwenkbaren ersten Dichtung.

In einer besonders vorteilhaften Ausführungsvariante kann die Schiebetürdichtung durch ein zusätzliches Federelement in der Grundposition und somit in der geschlossenen Position der Schiebetürdichtung gehalten sein. Das Federelement bewirkt eine Federkraft, über die die erste Dichtung in Richtung der zweiten Dichtung bewegt wird. Um das Türelement in die geöffnete Stellung überführen zu können, muss die Federkraft des Federelements überwunden werden, um die beiden Dichtungen auseinanderzubewegen.

Das Federelement ist vorzugsweise als Druckfeder ausgeführt, die die erste Dichtung von außen in Richtung der zweiten Dichtung drückt. Bei Verwendung eines Dichtungslängsträgers kann die Feder zwischen diesem und einem Halteelement angeordnet sein. Das Halteelement ist starr und ortsfest am Türelement befestigt, so dass sich die Druckfeder an diesem abstützen kann. Während des Öffnungsvorgangs bewegt sich die Rolle aus der Vertiefung heraus und der Dichtungslängsträger wird gegen die Federkraft der Druckfeder in Richtung des Halteelements gedrückt. Bewegt sich die Rolle während des Schließvorgangs zurück in die Vertiefung, entspannt sich die Druckfeder und bewegt dadurch den Dichtungslängsträger und damit auch die erste Dichtung in Richtung der zweiten Dichtung.

Das Halteelement ist in einer vorteilhaften Ausführungsvariante an der Halteschiene befestigt und erstreckt sich in Richtung des darüber befindlichen Dichtungslängsträgers derart weit, dass es zumindest bereichsweise in Höhe des Dichtungslängsträgers angeordnet ist und die Druckfeder zwischen dem Halteelement und dem Dichtungslängsträger angeordnet werden kann.

Die Führungsschiene für die Rolle ist vorzugsweise oberhalb des Dichtungslängsträgers am Türportal angeordnet. Die Rolle ist auf einem im Wesentlichen eine horizontale Ebene auszubildender Rollenträger angeordnet und um eine vertikal ausgerichtete Drehachse drehbar gelagert. Die Rolle ist also vertikal gelagert, so dass sie in horizontaler Bewegungsrichtung auf der Führungsschiene abrollen kann.

Die Erfindung wird anhand der nachfolgenden Figuren näher erläutert. Die Figuren sind dabei nur beispielhaft zu verstehen und sollen die Erfindung nicht auf die gezeigten Ausführungsbeispiele beschränken. Insbesondere sind die Figuren lediglich Prinzipdarstellungen, die nicht in allen Aspekten maßstabsgetreu sind.

Es zeigen:
- Fig. 1:: eine Schiebetürdichtung im Querschnitt in anliegender Stellung,
- Fig. 2:: die Schiebetürdichtung aus Figur 1 in nicht anliegender Stellung,
- Fig. 3:: eine besonders vorteilhafte Ausführungsvariante der Schiebetürdichtung in anliegender Stellung und in perspektivischer Darstellung,
- Fig. 4:: die Schiebetürdichtung aus Figur 3 im Querschnitt,
- Fig. 5:: die Schiebetürdichtung aus Figur 3 von unten bei geschlossenem Zustand der Schiebetür,
- Fig. 6:: die Schiebetürdichtung aus Figur 3 in nicht anliegender Stellung in perspektivischer Darstellung,
- Fig. 7:: die Schiebetürdichtung aus Figur 6 im Querschnitt,
- Fig. 8:: die Schiebetürdichtung aus Figur 6 von unten bei geöffneter Stellung der Schiebetür.

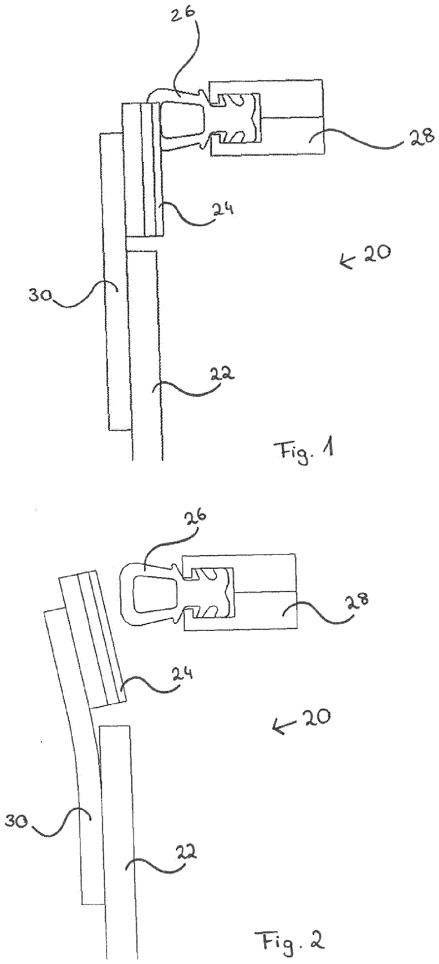

Die Figuren 1 und 2 zeigen das Grundprinzip einer erfindungsgemäßen Schiebetür 20. An einem Türelement 22 ist eine erste Dichtung 24, ausgeführt als Dichtfläche, angeordnet. Die erste Dichtung 24 kommt an einer zweiten Dichtung 26, die an einem Türportal 28 ortsfest angeordnet ist.

Über ein Klappscharnier kann die erste Dichtung 24 von der zweiten Dichtung 26 entfernt bzw. wegbewegt werden. Das Klappscharnier ist im gezeigten Ausführungsbeispiel durch einen Elastomer 30 gebildet. Figur 1 zeigt die beiden Dichtungen 24, 26 in Anlage, Figur 2 in geöffneter Stellung.

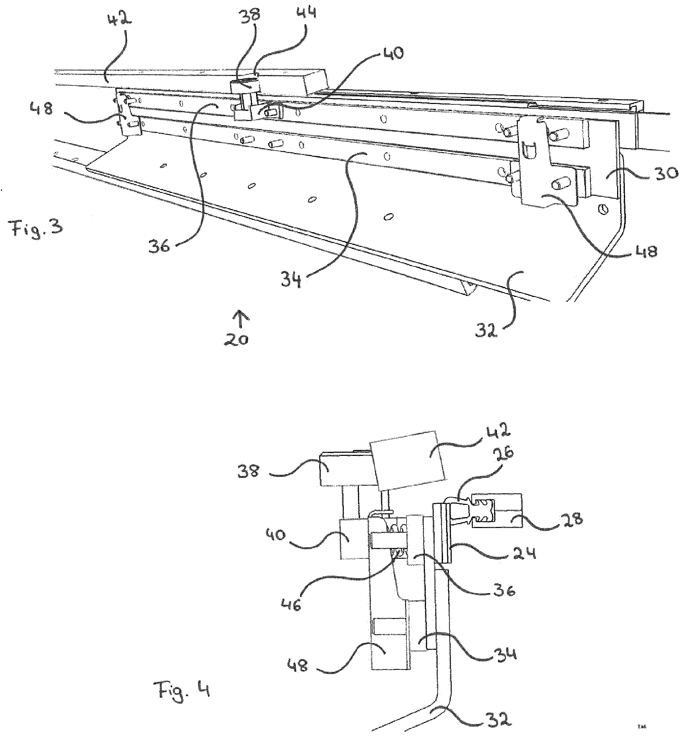

Die Figuren 3 bis 8 zeigen eine besonders vorteilhafte Ausführungsvariante der Erfindung. Zunächst einmal ist erkennbar, dass das Klappscharnier bzw. der Elastomer 30 in einem oberen Bereich des Türelements 22 angeordnet ist. Der Elastomer ist rechteckig ausgeführt und erstreckt sich entlang der Breite des Türelements, also in Querrichtung und entlang der Hauptbewegungsrichtung des Türelements 22. Die Schiebtürdichtung 20 ist im gezeigten Ausführungsbeispiel auf einer im Querschnitt etwa L-förmigen Haltevorrichtung 32 angeordnet. Alternativ kann die Schiebetürdichtung 20 aber auch unmittelbar am Türelement 22 befestigt sein. Die Haltevorrichtung 32 wird im Sinne der Erfindung also technisch dem Türelement 22 zugeordnet.

Der Elastomer 30 ist mit Hilfe einer Halteschiene 34 an der Haltevorrichtung 32 befestigt und ist somit zwischen der Halteschiene 34 und der Haltevorrichtung 32 angeordnet und gehalten.

Parallel zur Halteschiene 34 verläuft ein Dichtungslängsträger 36. Im gezeigten Ausführungsbeispiel weisen die Halteschiene 34 und der Dichtungslängsträger 36 etwa die gleichen geometrischen Abmessungen auf und können beispielsweise durch Aluminiumelemente gebildet sein.

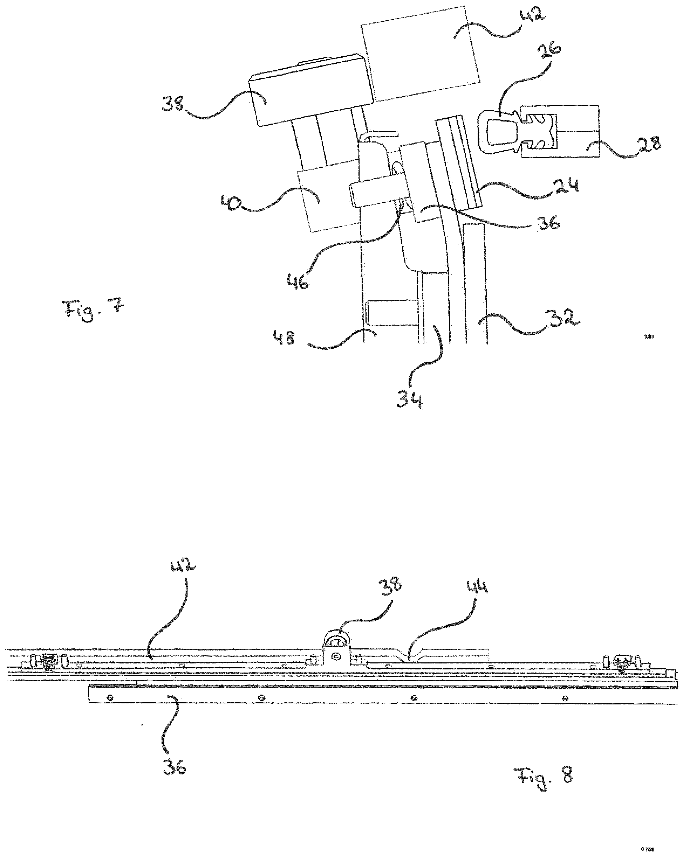

Wie insbesondere die Figuren 4 und 7 verdeutlichen, fungiert der Elastormer 30 zwischen der Halteschiene 34 und dem Dichtungslängsträger 36 wie ein Klappscharnier. Die Figuren 4 und 7 zeigen dabei die beiden Zustände, nämlich die Schiebetürdichtung 20 in geschlossener, dichtender Stellung und in geöffneter, nicht dichtender Stellung.

Um die Schiebtürdichtung 20 von der geschlossenen Stellung in die offene Stellung zu überführen, ist ein Betätigungsmittel, ausgeführt als Rolle 38 vorgesehen. Die Rolle 38 steht mit dem Klappscharnier in Verbindung, im gezeigten Ausführungsbeispiel ist sie am Dichtungslängsträger 36 befestigt. Zur Befestigung dient ein Rollenträger 40, der sich im Wesentlichen horizontal vom Dichtungslängsträger 36 weg streckt. Die Rolle 38 ist auf dem Rollenträger 40 um eine vertikal sich erstreckende Drehachse drehbar gelagert und rollt auf einer Führungsschiene 42, die fest am Türportal angeordnet ist, ab.

Die Führungsschiene 42 weist eine Vertiefung 44 auf, in der die Rolle 38 im geschlossenen Zustand der Schiebetür zur Anlage kommt. Wird das Türelement 22 geöffnet und seitlich verfahren, bewegt sich die Rolle 38 aus der Vertiefung heraus und verschwenkt dadurch das Klappscharnier bzw. den Elastomer 30.

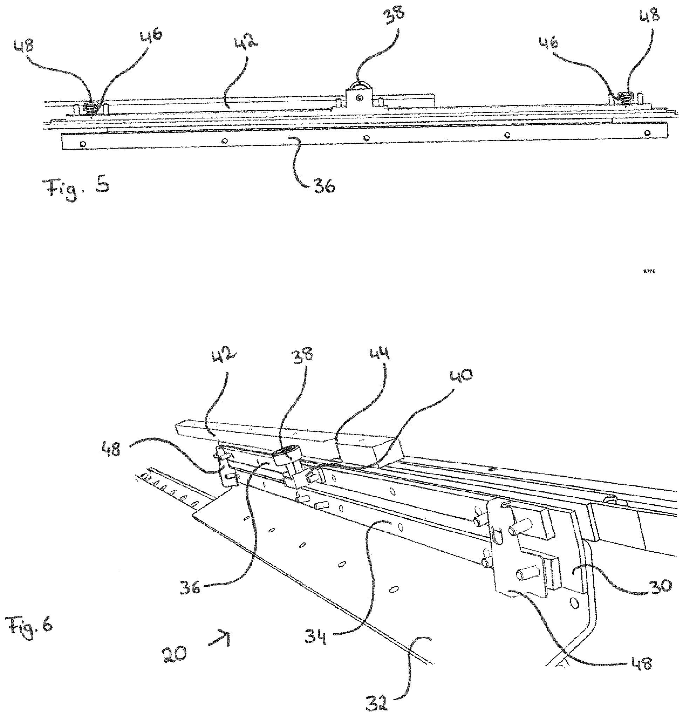

Figur 5 zeigt die Schiebetürdichtung 20 von unten und in geschlossener Stellung. Figur 8 zeigt die Schiebetürdichtung 20 ebenfalls von unten, allerdings in offener Stellung. Erkennbar ist, dass die Rolle 38 in der offenen Stellung aus der Vertiefung 44 herausgefahren wurde und sich die Schiebetürdichtung 20 geöffnet hat.

In einer besonders vorteilhaften Ausführungsvariante wird nicht nur die Elastizität des Elastomers 30 genutzt, sondern es sind zusätzliche Federelemente 46 vorgesehen. Diese sind als Druckfedern ausgeführt und wirken von außen auf die erste Dichtung 24. Zu diesem Zweck sind Halteelemente 48 vorgesehen, die fest mit dem Türelement 22 verbunden sind. Im gezeigten Ausführungsbeispiel sind sie unmittelbar an der Halteschiene 34 angeordnet und erstrecken sich in Richtung des Dichtungslängsträgers 36 derart weit, dass jeweils ein Federelement 46 zwischen dem Halteelement 48 und dem Dichtungslängsträger 36 angeordnet werden kann.

Ein Verfahren des Türelements 22 bewirkt, dass die Rolle 38 den Dichtungslängsträger 36 gegen die Federkraft der Federelemente 46 nach außen bewegt und somit die erste Dichtung 24 von der zweiten Dichtung 26 abhebt.

Die Erfindung ist nicht auf die gezeigten Ausführungsbeispiele beschränkt, sondern sie umfasst auch weitere Varianten der Erfindung. Beispielsweise können auch mehrere Federelemente 46 oder auch nur ein einziges Federelement 46 vorgesehen sein. Auch kann es sinnvoll sein, auf den Dichtungslängsträger 36 oder die Halteschiene 34 zu verzichten. Anstelle des Elastomers 30 können auch andere geeignete Klappscharniere genutzt werden. Anstelle einer Vertiefung 44 in der Führungsschiene 42 kann bei beispielsweise auch lediglich eine Schräge auf der Führungsschiene 42 ausgebildet sein, die die Rolle 38 über eine längere Strecke vor-bzw. zurückbewegt.

## Patentansprüche

1. Schiebetür eines Fahrzeugs, mit einem Türportal (28), mit einem in Querrichtung verfahrbaren Türelement (22) und einer Schiebetürdichtung (20), aufweisend eine erste Dichtung (24) und eine an dem Türportal (28) angeordnete ortsfeste zweite Dichtung (26), wobei die erste Dichtung (24) in geschlossener Stellung des Türelements (22) an der zweiten Dichtung (26) anliegt, und die erste Dichtung (24)
- an einem am Türelement (22) befestigten Klappscharnier angeordnet ist, das von einer geschlossenen dichtenden Stellung in eine offene, nicht dichtende Stellung und umgekehrt überführbar ist, und
- durch Federkraft passiv in der geschlossenen Stellung gehalten und durch eine äußere Kraft in die geöffnete Stellung bringbar ist.

2. Schiebetür nach Anspruch 1, **dadurch gekennzeichnet, dass** das Klappscharnier durch einen am Türelement (22) angeordneten Elastomer (30) gebildet ist, an dem die erste Dichtung (24) angeordnet ist.

3. Schiebetür nach Anspruch 1 oder Anspruch 2, **dadurch gekennzeichnet, dass** ein Betätigungselement vorgesehen ist, welches ein Verschwenken des Klappscharniers in Abhängigkeit der Verfahrbewegung des Türelements (22) bewirkt.

4. Schiebetür nach Anspruch 3, **dadurch gekennzeichnet, dass** das Betätigungselement durch eine am Türelement (22) befestigte Rolle (38) gebildet ist, die auf einer am Türportal (28) angeordneten Führungsschiene (42) abrollt, wobei die Führungsschiene (42) derart ausgeführt ist, dass die Rolle (38) im Verlauf ihrer Abrollstrecke auf der Führungsschiene (42) auch in Querrichtung zur Verschieberichtung des Türelements (22) bewegt wird und mit dem Klappscharnier in Wirkverbindung steht.

5. Schiebetür nach Anspruch 4, **dadurch gekennzeichnet, dass** die Führungsschiene (42) eine Vertiefung (44) aufweist, in der sich die Rolle im geschlossenen Zustand des Türelements (22) befindet.

6. Schiebetür nach Anspruch 4 oder Anspruch 5, **dadurch gekennzeichnet, dass** auf der dem Türportal (28) abgewandten Seite ein Dichtungslängsträger (36) am Elastomer (30) befestigt ist, an dem das Betätigungselement angeordnet ist.

7. Schiebetür nach einem der Ansprüche 2 bis 6, **dadurch gekennzeichnet, dass** der Elastomer (30) an einer Halteschiene (34) am Türelement (22) befestigt ist.

8. Schiebetür nach einem der Ansprüche 1 bis 7, **dadurch gekennzeichnet, dass** zumindest ein Federelement (46) vorgesehen ist, dessen Federkraft auf die erste Dichtung (24) wirkt und diese in Richtung der zweiten Dichtung (26) mit einer Federkraft beaufschlagt.

9. Schiebetür nach Anspruch 8, **dadurch gekennzeichnet, dass** zumindest ein Halteelement (48) vorgesehen ist, welches am Türelement (22) festgelegt ist und sich das Federelement (46) zwischen dem Dichtungslängsträger (36) und dem Halteelement (48) befindet, wobei das Federelement (46) als Druckfeder ausgeführt ist, die sich sowohl am Dichtungslängsträger (36) als auch am Halteelement (48) abstützt.

10. Schiebetür nach Anspruch 9, **dadurch gekennzeichnet, dass** das Halteelement (48) an der Halteschiene (34) befestigt ist und sich in Richtung des Dichtungslängsträgers (36) erstreckt.

## Claims

1. A sliding door of a vehicle, with a door portal (28), with a door element (22) which can be moved in the transverse direction, and a sliding door seal (20) having a first seal (24) and a stationary second seal (26) arranged on the door portal (28), wherein the first seal (24) engages on the second seal (26) in the closed position of the door element (22), and the first seal (24)
- is arranged on a folding hinge which is secured to the door element (22) and which can be transferred from a closed sealing position into an open non-sealing position and vice versa, and
- is passively held in the closed position by spring force and can be brought into the open position by an external force.

2. The sliding door according to claim 1, **characterized in that** the folding hinge is formed by an elastomer (30) which is arranged on the door element (22) and on which the first seal (24) is arranged.

3. Sliding door according to claim 1 or 2, **characterized in that** an actuating element is provided which causes a pivoting of the folding hinge in dependence of the movement of the door element (22).

4. The sliding door according to claim 3, **characterized in that** the actuating element is formed by a roller (38) which is secured to the door element (22) and rolls on a guide rail (42) arranged on the door portal (28), wherein the guide rail (42) is designed in such a manner that the roller (38), in the course of its rolling path on the guide rail (42), is also moved in a direction transverse to the displacement direction of the door element (22) and is in operative connection with the folding hinge.

5. The sliding door according to claim 4, **characterized in that** the guide rail (42) has a recess (44) in which the roller is located when the door element (22) is in the closed state.

6. The sliding door according to claim 4 or 5, **characterized in that** on the side facing away from the door portal (28), a longitudinal seal carrier (36) is secured to the elastomer (30), on which the actuating element is arranged.

7. The sliding door according to any one of claims 2 to 6, **characterized in that** the elastomer (30) is secured to a retaining rail (34) on the door element (22).

8. The sliding door according to any one of claims 1 to 7, **characterized in that** at least one spring element (46) is provided, the spring force of which acts on the first seal (24) and applies a spring force thereto in the direction of the second seal (26).

9. The sliding door according to claim 8, **characterized in that** at least one retaining element (48) is provided which is fixed to the door element (22), and the spring element (46) is located between the longitudinal seal carrier (36) and the retaining element (48), wherein the spring element (46) is designed as a compression spring which is supported both on the longitudinal seal carrier (36) and on the retaining element (48).

10. The sliding door according to claim 9, **characterized in that** the retaining element (48) is secured to the retaining rail (34) and extends in the direction of the longitudinal seal carrier (36).

## Revendications

1. Porte coulissante d'un véhicule, avec un portique de porte (28), avec un élément de porte (22) pouvant être déplacé en direction transversale et un joint d'étanchéité de porte coulissante (20), comportant un premier joint d'étanchéité et un deuxième joint d'étanchéité (26) fixe disposé sur le portique de porte (28), sachant que le premier joint d'étanchéité (24) s'applique en position fermé de l'élément de porte (22) au deuxième joint d'étanchéité (26) et le premier joint d'étanchéité (24)
- est disposé sur une charnière rabattable fixée sur l'élément de porte (22), qui peut être transférée d'une position fermée étanchéifiante à une position ouverte non étanchéifiante et vice versa, et
- peut être maintenue passivement dans la position fermée par une force de ressort et placée dans la position ouverte par une force extérieure.

2. Porte coulissante selon la revendication 1,
***caractérisée en ce que*** la charnière rabattable est formée par un élastomère (30) disposé sur l'élément de porte (22) sur lequel est disposé le premier joint d'étanchéité (24).

3. Porte coulissante selon la revendication 1 ou la revendication 2, *caractérisée en* ce *qu*'un élément d'actionnement est prévu, lequel produit un pivotement de la charnière rabattable en fonction du mouvement de déplacement de l'élément de porte (22).

4. Porte coulissante selon la revendication 3,
***caractérisée en ce que*** l'élément d'actionnement est formé par un galet (38) fixé à l'élément de porte (22), qui roule sur un rail de guidage (42) disposé sur le portique de porte (28), sachant que le rail de guidage (42) est exécuté de telle manière que le galet (38) est déplacé au cours de son trajet de roulement sur le rail de guidage (42) également en direction transversale par rapport à la direction de déplacement de l'élément de porte (22) et se trouve en liaison fonctionnelle avec la charnière rabattable.

5. Porte coulissante selon la revendication 4, ***caractérisée en ce que*** le rail de guidage (42) comporte une cavité (44) dans laquelle se trouve le galet à l'état fermé de l'élément de porte (22).

6. Porte coulissante selon la revendication 4 ou la revendication 5, ***caractérisée en ce que*** sur le côté éloigné du portique de porte (28) un support longitudinal d'étanchéité (36) est fixé à l'élastomère (30) sur lequel est disposé l'élément d'actionnement.

7. Porte coulissante selon l'une quelconque des revendications 2 à 6, ***caractérisée en ce que*** l'élastomère (30) est fixé à un rail de maintien (34) sur l'élément de porte (22).

8. Porte coulissante selon l'une quelconque des revendications 1 à 7, *caractérisée en ce qu*'au moins un élément faisant ressort (46) est prévu dont la force de ressort agit sur le premier joint d'étanchéité (24) et celui-ci étant sollicité par une force de ressort en direction du deuxième joint d'étanchéité (26).

9. Porte coulissante selon la revendication 8, *caractérisée en ce qu*'au moins un élément de maintien (48) est prévu, lequel est fixé à l'élément de porte (22) et l'élément faisant ressort (46) se trouve entre le support longitudinal d'étanchéité (36) et l'élément de maintien (48), sachant que l'élément faisant ressort (46) est exécuté sous la forme d'un ressort de pression, qui s'appuie tant sur le support longitudinal d'étanchéité (36) qu'également sur l'élément de maintien (48).

10. Porte coulissante selon la revendication 9, ***caractérisée en ce que*** l'élément de maintien (48) est fixé au rail de maintien (34) et s'étend en direction du support longitudinal d'étanchéité (36).
